# EUROPEAN PATENT SPECIFICATION

(11) **EP 3 449 590 B1**
(45) Date of publication and mention of the grant of the patent: **20.10.2021**
(21) Application number: 16778553.4
(22) Date of filing: 20.09.2016
(51) Int. Cl.: H04L 5/00, H04L 5/14

(54) **SYSTEMS, METHODS AND DEVICES FOR UPLINK CONTROL INFORMATION ENHANCEMENT**
SYSTEME, VERFAHREN UND VORRICHTUNGEN FÜR ERWEITERTE UPLINK-STEUERUNGSINFORMATIONEN
SYSTÈMES, PROCÉDÉS ET DISPOSITIFS POUR L'AMÉLIORATION D'INFORMATIONS DE COMMANDE DE LIAISON MONTANTE

(30) Priority: 29.04.2016 US 201662329753 P
(43) Date of publication of application: 06.03.2019
(73) Proprietor: Apple Inc., Cupertino, CA 95014 (US)
(72) Inventor: CHANG, Wenting, Beijing 100190 (CN); XIONG, Gang, Beaverton, OR 97006 (US); MONDAL, Bishwarup, San Jose, CA 95129 (US); ZHANG, Yushu, Beijing 100190 (CN); ZHU, Yuan, Beijing 100012 (CN)
(74) Representative: Barnfather, Karl Jon
(86) International application number: PCT/US2016/052653
(87) International publication number: WO 2017/189034

(56) References cited:
- NOKIA NETWORKS: "Dynamic PUCCH format adaptation", 3GPP DRAFT; R1-157126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051003394, Retrieved from the Internet: URL:http://www.3gpp.org/ftp/Meetings_3GPP_ SYNC/RAN1/Docs/ [retrieved on 2015-11-15]
- CATT: "Resource allocation for PUCCH format 4 and 5", 3GPP DRAFT; R1-156569, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051039882, Retrieved from the Internet: URL:http://www.3gpp.org/ftp/Meetings_3GPP_ SYNC/RAN1/Docs/ [retrieved on 2015-11-15]

## Description

### Technical Field

The present disclosure relates to wireless communication and more specifically to uplink control information.

### Background

Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN 104 implements GSM and/or EDGE RAT, the UTRAN 106 implements universal mobile telecommunication system (UMTS) RAT or other 3GPP RAT, and the E-UTRAN 108 implements LTE RAT.

A core network can be connected to the UE through the RAN Node. The core network can include a serving gateway (SGW), a packet data network (PDN) gateway (PGW), an access network detection and selection function (ANDSF) server, an enhanced packet data gateway (ePDG) and/or a mobility management entity (MME).

In "NOKIA NETWORKS: "Dynamic PUCCH format adaptation", 3GPP DRAFT; R1-157126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , FRANCE, vol. RAN WGi, no. Anaheim, USA; 20151115 - 20151122 1 November 2015 (2015-11-15), XP 051003394", a PUCCH format is selected based on a whole UCI payload. Once PUCCH format is selected, ARI is applied to select correct PUCCH resource.

In "CATT: "Resource allocation for PUCCH format 4 and 5", 3GPP DRAFT; R1-156569, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Anaheim, USA; 20151115 - 20151122 15 November 2015 (2015-11-15), XP051039882", HARQ-ACK codebook size is disclosed as a switching criteria. Either the dynamic or the fixed HARQ-ACK codebook size of the PUCCH format is used as a triggering point for switching between PUCCH formats.

### Brief Description of the Drawings

FIG. 1 is a diagram illustrating a self-contained time division duplex (TDD) subframe structure consistent with embodiments disclosed herein.
FIG. 2 is a diagram illustrating a radio access network (RAN) system that includes a fifth generation (5G) RAN node consistent with embodiments disclosed herein.
FIG. 3 is a diagram of beam refinement reference signal (BRRS) scheduling and transmission timing consistent with embodiments disclosed herein.
FIG. 4 is a schematic diagram illustrating the structure of a long term evolution (LTE) communication frame consistent with embodiments disclosed herein.
FIG. 5A is a diagram illustrating an LTE frequency division duplex (FDD) frame consistent with embodiments disclosed herein.
FIG. 5B is a diagram illustrating an LTE time division duplex (TDD) frame consistent with embodiments disclosed herein.
FIG. 6 is a diagram illustrating an electronic device circuitry that may be radio access node (RAN) node circuitry (such as an eNB circuitry), UE circuitry, network node circuitry, or some other type of circuitry consistent with embodiments disclosed herein.
FIG. 7 is a block diagram illustrating, for one embodiment, example components of a user equipment (UE) or mobile station (MS) device consistent with embodiments disclosed herein.
FIG. 8 is a flow chart illustrating a method for determining a physical uplink control channel (xPUCCH) format consistent with embodiments disclosed herein.
FIG. 9 is a block diagram illustrating components, according to some example embodiments, that can read instructions from a machine-readable or computer-readable medium (e.g., a machine-readable storage medium) and perform any one or more of the methodologies discussed herein.

### Detailed Description

A detailed description of systems and methods consistent with embodiments of the present disclosure is provided below. The invention is defined in the appended claims.

Techniques, apparatus and methods are disclosed that enable determining a physical uplink control channel format based on the determined uplink control information (UCI) payload size. Enhancement of an uplink control channel on a 5G physical uplink control channel (xPUCCH) based on UCI payload size can be accomplished by (1) a dropping rule if UCI payload size exceeds the maximum allowable payload size supported by xPUCCH format; (2) a scheduling request (SR) transmission scheme when combined with other UCI information; (3) enhancement on beam refinement reference signal (BRRS) scheduling; and (4) downlink control information (DCI) requests for the transmission of a channel state information (CSI) report and beam related information by itself.

Mobile communication has evolved from early voice systems to sophisticated, integrated communication platforms. Next generation wireless communication systems, such as fifth generation (5G) systems, can provide access to information and sharing of data. 5G is expected to be a unified network/system that targets vastly different and sometimes conflicting performance dimensions and services. Diverse multi-dimensional specifications can be driven by different services and applications. 5G can evolve based on 3GPP LTE-Advanced with additional potential new Radio Access Technologies (RATs) to form seamless wireless connectivity solutions. 5G is expected to connect devices through wireless and deliver fast and rich content and services.

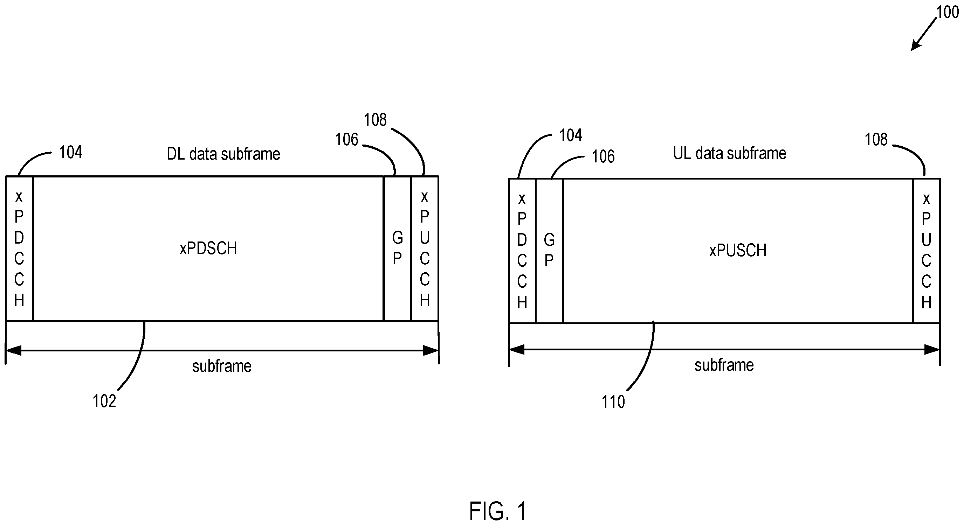

To enable low latency transmission for enhanced mobile broadband communication, a self-contained TDD subframe structure can be introduced for use with 5G systems (including UEs and RAN nodes). FIG. 1 illustrates one example of a self-contained TDD subframe structure comprising both downlink (DL) and uplink (UL) transmissions scheduled in one subframe. In a DL data subframe, a 5G physical downlink control channel (xPDCCH) 104 is transmitted before a 5G physical downlink shared channel (xPDSCH) 102. After xPDSCH, a guard period 106 provides switching time and propagation delay protection for a 5G physical uplink control channel (xPUCCH) 108. In a UL data subframe, xPDCCH 104 is transmitted first and is followed by guard period 106 to provide switching time and propagation delay protection for a 5G physical uplink shared channel (xPUSCH) 110. After xPUSCH 110, xPUCCH 108 is scheduled.

Note that in FIG. 1, to accommodate the DL to UL and UL to DL switching time and round-trip propagation delay, a guard period (GP) is inserted between the 5G physical downlink shared channel (xPDSCH) and the 5G physical uplink control channel (xPUCCH) as well as the 5G physical downlink control channel (xPDCCH) and the 5G physical uplink shared channel (xPUSCH).

In the existing LTE specification, the physical uplink control channel (PUCCH) is transmitted in a frequency region on the edges of the system bandwidth. The PUCCH and physical uplink shared channel (PUSCH) are multiplexed in a frequency division multiplexing (FDM) manner. In FIG. 1, xPUCCH 108 and the data channel are multiplexed in a time division multiplexing (TDM) manner.

Uplink control information (UCI) can include a scheduling request (SR), hybrid automatic repeat request (HARQ) acknowledge/negative acknowledge (ACK/NACK) feedback, a channel state information (CSI) report (e.g., channel quality indicator (CQI), pre-coding matrix indicator (PMI), and rank indicator (RI)) and beam related information. Beam related information can include: beam state information (BSI), which may include a beam index and beam reference signal received power (B-RSRP) measured from a beam reference signal (BRS); and beam refinement information (BRI), which may include a beam index and B-RSRP measured from beam refinement reference signal (BRRS).

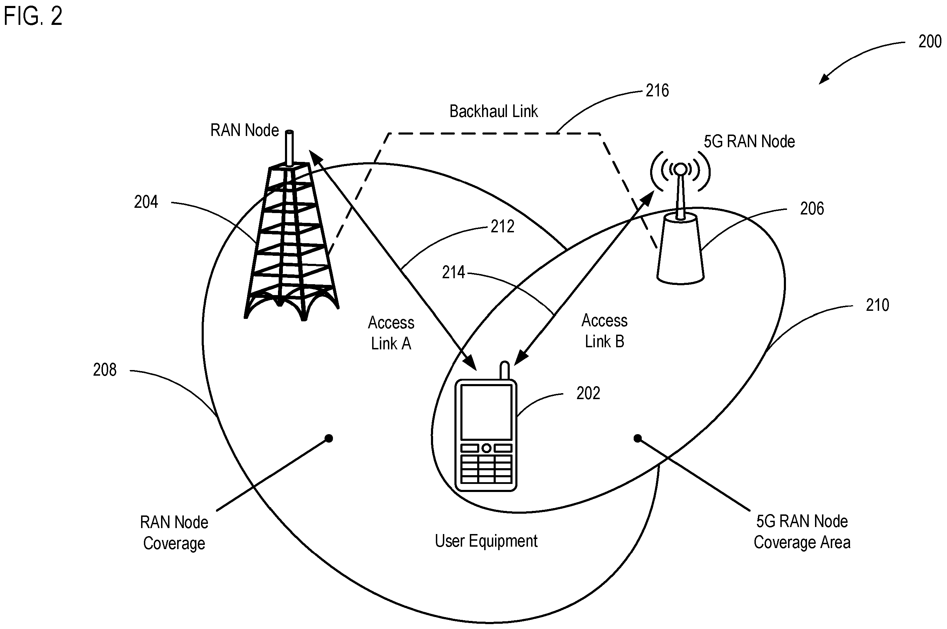

Turning to FIG. 2, an example of a portion of a radio access network (RAN) system 200 that includes a single cellular air interface (such as an LTE/LTE-Advanced access link) being provided between the RAN node 204 and the UE 202 (i.e., on Access Link A), and a 5G air interface (a second network interface such as a 5G self-contained time division duplex (TDD) subframe based interface) being provided between the 5G RAN node 206 and the UE 202 (i.e., on Access Link B) is shown. UE 202 is located within RAN node coverage 208. The UE 202 determines that connection with a 5G RAN node 206 will be beneficial to a user of the UE 202. In some embodiments, the UE 202 retains Access Link A to RAN node 204. The UE 202 can offload all or part of the wireless services onto Access Link A. In other embodiments, the UE 202 disconnects from Access Link A and moves wireless services to Access Link B. In some embodiments Access Link A and Access Link B use a same frequency and technology. In other embodiments, Access Link A and Access Link B use different frequencies (e.g., LTE licensed frequencies and unlicensed frequencies) and different link technology (e.g., LTE and Wi-Fi). In other embodiments, Access Link A and Access Link B use different frequencies and the similar link technology (e.g., LTE and LTE over mmWave).

Depending on different payload sizes, different xPUCCH formats can be defined. Enhancement of the uplink control channel on xPUCCH can be accomplished by (1) a dropping rule if UCI payload size exceeds the maximum allowable payload size supported by xPUCCH format; (2) a SR transmission scheme when combined with other UCI information bits; (3) an enhancement of BRRS scheduling; and (4) an enhanced DCI to request the transmission of a CSI report and beam related information by itself.

### (1) Dropping rule for UCI

With regard to (1), a dropping rule for UCI on xPUCCH, an embodiment of the DCI, which carries a downlink assignment and/or an uplink grant, bit fields are included to request the transmission of CSI report and beam related information including BSI and/or BRI. If HARQ ACK/NACK, CSI report and beam related information occur at the same time, total payload size can exceed the maximum allowable payload size supported by xPUCCH. For instance, for one xPUCCH format, the maximum UCI payload size is 22 bits. In this case, certain dropping rules can be defined to ensure the UCI payload alignment between eNB and UE.

In one embodiment, a UE can expect the UCI payload size to not exceed the maximum allowable payload size supported by xPUCCH format. An eNB ensures that total UCI payload size is not greater than the maximum allowable payload size. In one example, in the DL assignment, an eNB may request the transmission of only one of a CSI report, BSI report and BRI report on xPUCCH at one time.

In another embodiment, one or more UCI information sets, i.e., a CSI, BSI, BRI report and/or HARQ ACK/NACK feedback, may be dropped if the total UCI payload size exceeds the maximum allowable payload size supported by xPUCCH format. Further, the dropping rule or transmission priority of the CSI/BSI/BRI report, HARQ ACK/NCK can be pre-defined or configured by eNB through high layer signaling via 5G master information block (xMIB), 5G system information block (xSIB) or radio resource configuration (RRC) signaling. In one example, HARQ ACK/NCK feedback can be predefined with the highest priority, given that it would determine whether the data buffer at UE and eNB needs to be flushed.

In another embodiment, the priority of the CSI, BSI and BRI report can be defined depending on the deployment scenario or use cases. For example, if the transmission mode is switching from single beam to dual beam, which uses two CSI reports, while the beam state information has no abrupt fluctuation, then the CSI report has a higher priority than BSI/BRI report. In another example, if a new beam pair #Tx1/#Rx1, which is observed to provide better link quality than the current measured beam pair on CSI-RS, then the BSI report can be given a higher priority than the CSI report. In this way, the eNB may trigger a new CSI measurement based on the new reported beam pair.

In another embodiment, a threshold *Δ_{beam}* can be configured by the eNB through high layer signaling. This threshold is used to determine whether a timely beam report is needed. If the new beam pair is better than the current scheduling beam pair by *Δ_{beam},* where the network beam of the new beam pair is different from the current network beam, the UE will report the BSI if the xPUCCH is assigned.

In another embodiment, instead of an individual request, one bit field in the DCI format can be defined to schedule the request of a CSI/BSI/BRI report together. For example, a two bit field in the DCI can be defined, where "00" is for a CSI report only, "01" is for a BSI report only, "10" is for a BRI report only, and "11" is reserved.

### (2) SR transmission scheme when combined with other UCI information bits

In a dynamic TDD system, xPUCCH is scheduled by xPDCCH. In this case, it is scheduled for SR transmission. In one embodiment, one bit field in the DCI format can be defined to indicate the SR resource for SR transmission. If other UCI information is also triggered by this DCI format, an independent xPUCCH resource can be used for SR transmission and other UCI transmission. For instance, xPUCCH resource #1 can be allocated for SR transmission while xPUCCH resource #2 can be used for CSI report transmission.

In another embodiment, a SR is combined with other UCI data. For example, a SR information bit is present in the UCI payload, where SR bit "0" indicates the negative scheduling request while SR bit "1" indicates a positive scheduling request. For instance, when xPDSCH is scheduled, the UE may feed back HARQ ACK/NACK together with an SR information bit in the UCI payload.

Note that an ordering of UCI information can be defined to allow proper operation at the receiver. For instance, HARQ ACK/NACK is transmitted in a first part of the UCI payload and followed by a SR, CSI, BSI, or BRI report, if scheduled.

In another embodiment, cyclic redundancy check (CRC) is appended for UCI information. A SR data can be masked with CRC. For instance, two codewords *a*₀ and *a*₁ can be defined for SR bit "0" and "1," respectively. For a positive scheduling request, *a*₁ is masked with CRC bits, while a negative scheduling request, *a*₀ is masked with CRC bits.

### (3) Enhancement of BRRS scheduling

In some embodiments, a beam refinement reference signal (BRRS) is used to train a UE to refine a (Rx) beam. An eNB may transmit the BRRS using the same transmit (Tx) beam and the UE may switch the Rx beam within or across an orthogonal frequency-division multiplexing (OFDM) symbol to identify a Rx beam to use based on quality measurements. In one example, a BRRS can span the subframe excluding the OFDM symbols allocated for xPDCCH, guard period (GP), and xPUCCH transmission. In some embodiments, BRRS for each UE may be allocated with a 5 OFDM symbol duration.

To allow certain scheduling flexibility and BRRS multiplexing for multiple UEs within the same subframe, several designs can be used. In one embodiment, one field (e.g., a bit field) in the DCI format carrying a DL assignment and a UL grant can be used to indicate the gap between xPDCCH and scheduled BRRS transmission. In one example, one bit indicator can be included in the DCI format, where bit "0" indicates a constant delay, and bit "1" indicates that the gap is the constant delay + 1 subframe. Note that the constant delay can be predefined in the specification or configured by higher layer signaling. It can also be defined based on UE capability.

In another embodiment, a set of subframe gaps can be predefined in the specification or configured by higher layer signaling. A field in the DCI format can be used to indicate one subframe gap from the set of subframe gaps. For example, 4 subframe gaps {1, 2, 4, 8} can be defined. A bit value of "01" can be used to indicate that the gap between xPDCCH and BRRS transmission is 2 subframes.

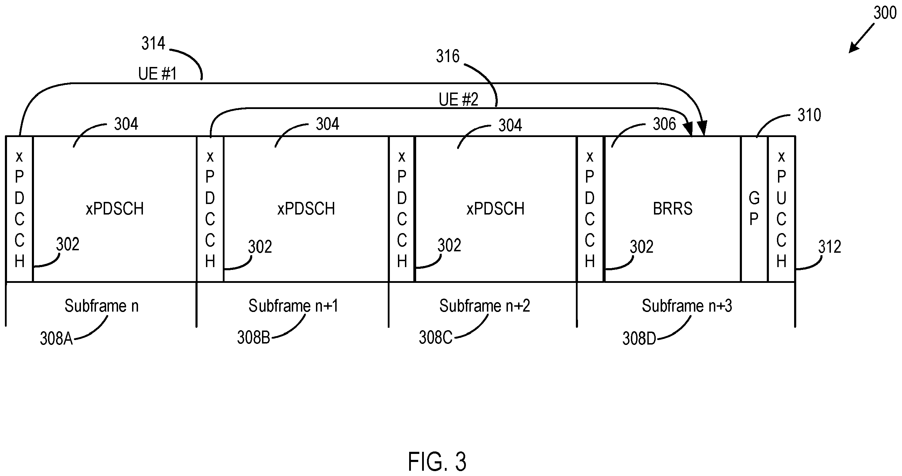

Turning to FIG. 3, an example of BRRS scheduling and transmission timing is shown. An eNB transmits DCI to UEs using xPDCCH 302 and data using xPDSCH 300. UE #1 receives DCI information in xPDCCH 302 indicating BRRS scheduling using a subframe gap of 3 on subframe n 308A, resulting in a BRRS transmission in subframe n+3 308D. UE #2 receives DCI information in xPDCCH 302 indicating BRRS scheduling using a subframe gap of 2 on subframe n+1, resulting in a BRRS transmission in subframe n+3 308D. After BRRS, a GP 310 is inserted to allow for transition to uplink transmissions. Then xPUCCH 312 is scheduled.

In this example, for UE #1, the gap between xPDCCH and BRRS transmission is 3 subframes. For UE #2, the gap between xPDCCH and BRRS transmission is 2 subframes. In some embodiments, for the DCI carrying uplink grant, this gap should be smaller than the gap between UL grant DCI and xPUSCH transmission.

In another embodiment, BRRS transmission gap bit field can reuse a bit field for xPUCCH/xPUSCH delay.

### (4) New DCI to request the transmission of CSI report and beam related information

In the DCI format carrying DL assignment, xPDSCH is scheduled, which indicates that HARQ ACK/NACK feedback is included in the xPUCCH transmission.

In some embodiments, at an initial stage of transmission, an eNB may need to request the BSI report only prior to subsequent data transmission. Due to this initial BSI report before data transmission, a dummy DCI may be defined to allow eNB to schedule the request of CSI/BSI/BRI report and/or SR without data transmission scheduling. In one embodiment, a bit field in the DCI format carrying DL assignment can be defined to indicate whether xPDSCH is scheduled or not. In one example, bit "0" may indicate that xPDSCH is not scheduled while bit "1" may indicate that xPDSCH is scheduled.

In another embodiment, reserved values in the DCI format can be used to indicate whether xPDSCH is scheduled or not. In one example, reserved bits in the modulation and coding scheme (MCS) can be used to indicate that xPDSCH is not scheduled. More specifically, if bit "1111" is reserved in the MCS and bit "1111" is present in the DCI, this indicates that xPDSCH is not scheduled. In another example, resource allocation bit field in the existing DCI formats can be set to zero to indicate that the xPDSCH is not scheduled.

In another embodiment, a new DCI format may be defined. The format can include a singular request of CSI/BSI/BRI report and/or SR. Note that a bit field may be defined to differentiate between DCI formats. To help reduce blind decoding attempts, zero padding can be inserted to ensure the size of this new DCI format matches with other DCI formats.

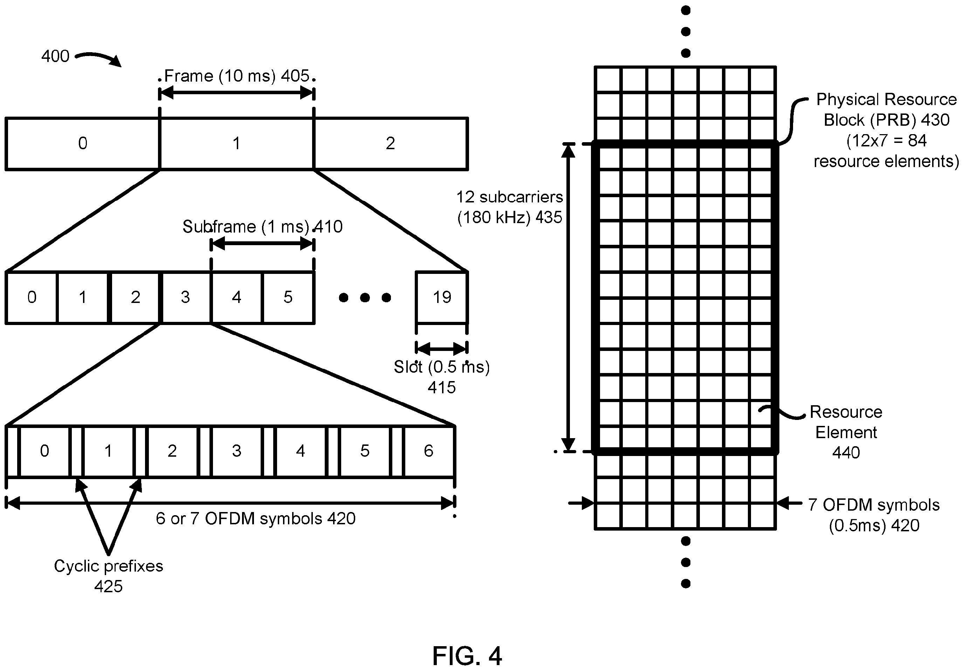

FIG. 4 is a schematic diagram 400 illustrating the structure of a long term evolution (LTE) communication frame 405. A frame 405 has a duration of 10 milliseconds (ms). The frame 405 includes ten subframes 410, each having a duration of 1 ms. Each subframe 410 includes two slots 415, each having a duration of 0.5 ms. Therefore, the frame 405 includes 20 slots 415.

Each slot 415 includes six or seven orthogonal frequency-division multiplexing (OFDM) symbols 420. The number of OFDM symbols 420 in each slot 415 is based on the size of the cyclic prefixes (CP) 425. For example, the number of OFDM symbols 420 in the slot 415 is seven while in normal mode CP and six in extended mode CP.

The smallest allocable unit for transmission is a resource block 430 (i.e., physical resource block (PRB) 430). Transmissions are scheduled by PRB 430. A PRB 430 consists of 12 consecutive subcarriers 435, or 180 kHz, for the duration of one slot 415 (0.5 ms). A resource element 440, which is the smallest defined unit, consists of one OFDM subcarrier during one OFDM symbol interval. In the case of normal mode CP, each PRB 430 consists of 12 x 7 = 84 resource elements 440. Each PRB 430 consists of 72 resource elements 440 in the case of extended mode CP.

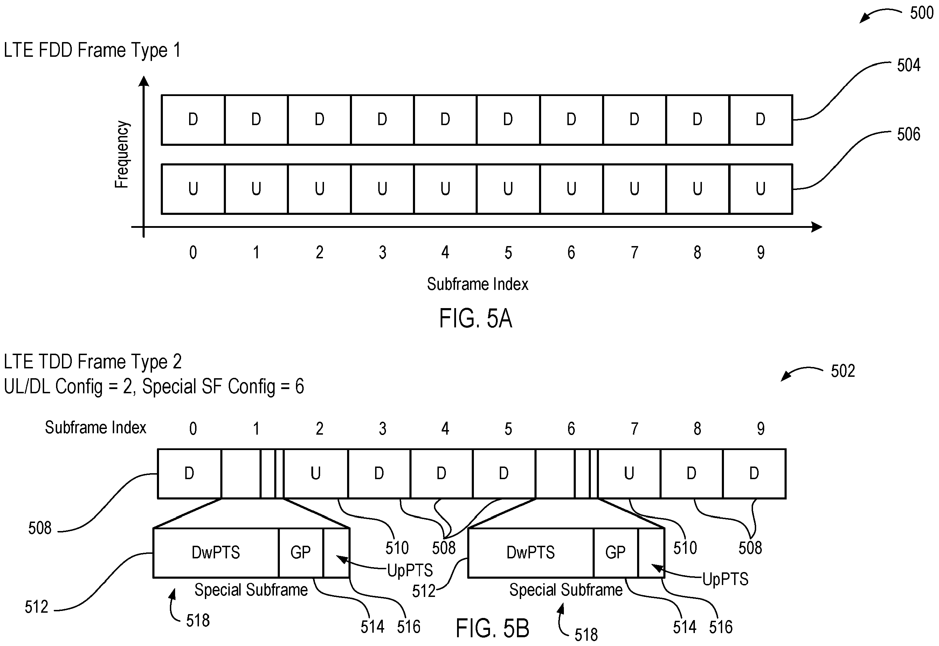

FIG. 5A is a diagram illustrating an LTE frequency division duplex (FDD) frame consistent with embodiments disclosed herein. In an FDD frame, upload subframes 506 are on a different carrier (frequency) than download frames 504. In an FDD frame, CRS is transmitted in every subframe, except in the MBSFN region of the MBSFN subframes. PSS and SSS are transmitted in subframes 0 and 5. PBCH is transmitted in subframe 0. SIB-1 is transmitted on subframe 5 on systems frame number (SFN) satisfying the condition where SFN mod 2 = 0 (i.e., every other frame). Paging occurs in subframes 0, 4, 5 and 9 on frames satisfying the equation SFN mod T, where T is the DRX cycle of the UE. In MBSFN subframes, a first one or two symbols are used as non-MBSFN region. CRS is transmitted on the first symbol of non-MBSFN region of an MBSFN subframe.

FIG. 5B is a diagram illustrating an LTE time division duplex (TDD) frame consistent with embodiments disclosed herein. In the example shown in a TDD frame, both upload and download operations share a carrier (frequency). Between a transition from download subframes 508 to upload subframes 510 is special subframe 518. Special subframe 518 includes DwPTS 512, a guard period (GP) 514 and uplink pilot time slot (UpPTS) 516. In a TDD frame, CRS is transmitted in every downlink subframe, except in the MBSFN region of the MBSFN subframes. PSS are transmitted on subframes 0 and 5. SSS are transmitted in subframes 1 and 6. Physical broadcast channel (PBCH) is transmitted in subframe 0. System information block (SIB)-1 is transmitted on subframe 5 on systems frame number (SFN) satisfying the condition, where SFN mod 2 = 0 (i.e., every other frame). Paging in subframes 0, 1, 5 and 6 on frame satisfying the equation SFN mod T, where T is the discontinuous reception (DRX) cycle of the UE. In an MBSFN subframe, a first one or two symbols are used as non-MBSFN regions. CRS is transmitted on the first symbol of non-MBSFN region of an MBSFN subframe. Subframes 3, 7, 8, 9 can be configured as MBSFN subframe for TDD.

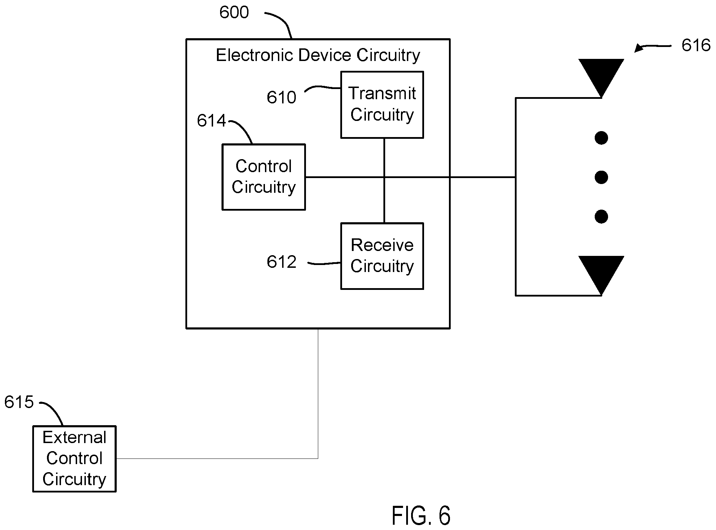

FIG. 6 is a block diagram illustrating electronic device circuitry 600 that may be radio access node (RAN) node circuitry (such as an eNB circuitry), UE circuitry, network node circuitry, or some other type of circuitry in accordance with various embodiments. In embodiments, the electronic device circuitry 600 may be, or may be incorporated into or otherwise a part of, a RAN Node (e.g., an eNB), a UE, a mobile station (MS), a BTS, a network node, or some other type of electronic device. In embodiments, the electronic device circuitry 600 may include radio transmit circuitry 610 and receive circuitry 612 coupled to control circuitry 614 (e.g., baseband processor(s), etc.). In embodiments, the transmit circuitry 610 and/or receive circuitry 612 may be elements or modules of transceiver circuitry, as shown. In some embodiments, some or all of the control circuitry 615 can be in a device separate or external from the transmit circuitry 610 and the receive circuitry 612 (baseband processors shared by multiple antenna devices, as in cloud-RAN (C-RAN) implementations, for example).

The electronic device circuitry 610 may be coupled with one or more plurality of antenna elements 616 of one or more antennas. The electronic device circuitry 600 and/or the components of the electronic device circuitry 600 may be configured to perform operations similar to those described elsewhere in this disclosure.

In embodiments where the electronic device circuitry 600 is or is incorporated into or otherwise part of a UE, the transmit circuitry 610 can transmit xPUCCH and xPUSCH as shown in FIG. 1. The receive circuitry 612 can receive xPDCCH and xPDSCH as shown in FIG. 1.

In embodiments where the electronic device circuitry 600 is an eNB, BTS and/or a network node, or is incorporated into or is otherwise part of an eNB, BTS and/or a network node, the transmit circuitry 610 can transmit xPDCCH and xPDSCH as shown in FIG. 1. The receive circuitry 612 can receive xPUCCH and xPUSCH as shown in FIG. 1.

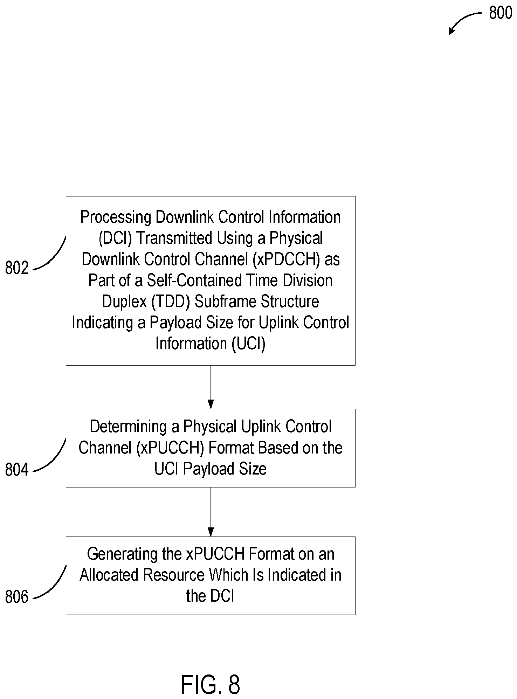

In certain embodiments, the electronic device circuitry 600 shown in FIG. 6 is operable to perform one or more methods, such as the methods shown in FIG. 8.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

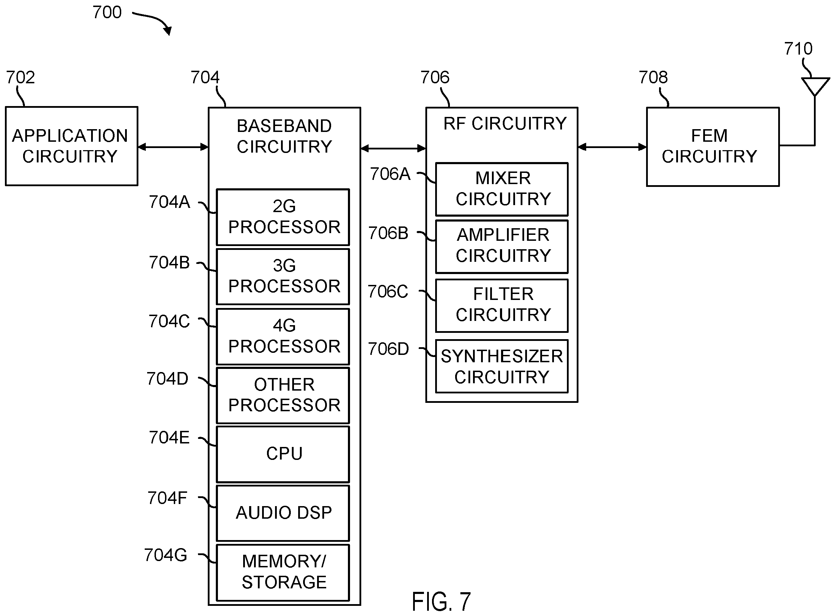

Embodiments described herein may be implemented into a system using any suitably configured hardware and/or software. FIG. 7 is a block diagram illustrating, for one embodiment, example components of a user equipment (UE) or mobile station (MS) device 700. In some embodiments, the UE device 700 may include application circuitry 702, baseband circuitry 704, Radio Frequency (RF) circuitry 706, front-end module (FEM) circuitry 708, and one or more antennas 710, coupled together at least as shown in FIG. 7.

The application circuitry 702 may include one or more application processors. By way of non-limiting example, the application circuitry 702 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 704 may include one or more single-core or multi-core processors. The baseband circuitry 704 may include one or more baseband processors and/or control logic. The baseband circuitry 704 may be configured to process baseband signals received from a receive signal path of the RF circuitry 706. The baseband 704 may also be configured to generate (or encode) baseband signals for a transmit signal path of the RF circuitry 706. The baseband processing circuitry 704 may interface with the application circuitry 702 for generation and processing of the baseband signals, and for controlling operations of the RF circuitry 706.

By way of non-limiting example, the baseband circuitry 704 may include at least one of a second generation (2G) baseband processor 704A, a third generation (3G) baseband processor 704B, a fourth generation (4G) baseband processor 704C, other baseband processor(s) 704D for other existing generations, and generations in development or to be developed in the future (e.g., fifth generation (5G), 6G, etc.). The baseband circuitry 704 (e.g., at least one of baseband processors 704A-704D) may handle various radio control functions that enable communication with one or more radio networks via the RF circuitry 706. By way of non-limiting example, the radio control functions may include signal modulation/demodulation, encoding/decoding, radio frequency shifting, other functions, and combinations thereof. In some embodiments, modulation/demodulation circuitry of the baseband circuitry 704 may be programmed to perform Fast-Fourier Transform (FFT), precoding, constellation mapping/demapping functions, other functions, and combinations thereof. In some embodiments, encoding/decoding circuitry of the baseband circuitry 704 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 704 may include elements of a protocol stack. By way of non-limiting example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 704E of the baseband circuitry 704 may be programmed to run elements of the protocol stack for signaling of the PHY, MAC, RLC, PDCP and/or RRC layers. In some embodiments, the baseband circuitry 704 may include one or more audio digital signal processor(s) (DSP) 704F. The audio DSP(s) 704F may include elements for compression/decompression and echo cancellation. The audio DSP(s) 704F may also include other suitable processing elements.

The baseband circuitry 704 may further include memory/storage 704G. The memory/storage 704G may include data and/or instructions for operations performed by the processors of the baseband circuitry 704 stored thereon. In some embodiments, the memory/storage 704G may include any combination of suitable volatile memory and/or nonvolatile memory. The memory/storage 704G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 704G may be shared among the various processors or dedicated to particular processors.

Components of the baseband circuitry 704 may be suitably combined in a single chip, a single chipset, or disposed on a same circuit board in some embodiments. In some embodiments, some or all of the constituent components of the baseband circuitry 704 and the application circuitry 702 may be implemented together, such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry.

The RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. The RF circuitry 706 may include a receive signal path which may include circuitry to down-convert RF signals received from the FEM circuitry 708, and provide baseband signals to the baseband circuitry 704. The RF circuitry 706 may also include a transmit signal path which may include circuitry to up-convert baseband signals provided by the baseband circuitry 704, and provide RF output signals to the FEM circuitry 708 for transmission.

In some embodiments, the RF circuitry 706 may include a receive signal path and a transmit signal path. The receive signal path of the RF circuitry 706 may include mixer circuitry 706A, amplifier circuitry 706B, and filter circuitry 706C. The transmit signal path of the RF circuitry 706 may include filter circuitry 706C and mixer circuitry 706A. The RF circuitry 706 may further include synthesizer circuitry 706D configured to synthesize a frequency for use by the mixer circuitry 706A of the receive signal path and the transmit signal path. In some embodiments, the mixer circuitry 706A of the receive signal path may be configured to down-convert RF signals received from the FEM circuitry 708 based on the synthesized frequency provided by synthesizer circuitry 706D. The amplifier circuitry 706B may be configured to amplify the down-converted signals.

The filter circuitry 706C may include a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may include zerofrequency baseband signals, although this is not a requirement. In some embodiments, the mixer circuitry 706A of the receive signal path may comprise passive mixers, although the scope of the embodiments is not limited in this respect.

In some embodiments, the mixer circuitry 706A of the transmit signal path may be configured to up-convert input baseband signals based on the synthesized frequency provided by the synthesizer circuitry 706D to generate RF output signals for the FEM circuitry 708. The baseband signals may be provided by the baseband circuitry 704 and may be filtered by filter circuitry 706C. The filter circuitry 706C may include a low-pass filter (LPF), although the scope of the embodiments is not limited in this respect. In some embodiments, the mixer circuitry 706A of the receive signal path and the mixer circuitry 706A of the transmit signal path may include two or more mixers, and may be arranged for quadrature downconversion and/or upconversion, respectively. In some embodiments, the mixer circuitry 706A of the receive signal path and the mixer circuitry 706A of the transmit signal path may include two or more mixers and may be arranged for image rejection (e.g., Hartley image rejection). In some embodiments, the mixer circuitry 706A of the receive signal path and the mixer circuitry 706A may be arranged for direct downconversion and/or direct upconversion, respectively. In some embodiments, the mixer circuitry 706A of the receive signal path and the mixer circuitry 706A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In such embodiments, the RF circuitry 706 may include analog-to-digital converter (ADC) and digital-to-analog converter (DAC) circuitry, and the baseband circuitry 704 may include a digital baseband interface to communicate with the RF circuitry 706.

In some dual-mode embodiments, separate radio IC circuitry may be provided for processing signals for each spectrum, although the scope of the embodiments is not limited in this respect.

In some embodiments, the synthesizer circuitry 706D may include one or more of a fractional-N synthesizer and a fractional N/N+1 synthesizer, although the scope of the embodiments is not limited in this respect as other types of frequency synthesizers may be suitable. For example, synthesizer circuitry 706D may include a delta-sigma synthesizer, a frequency multiplier, a synthesizer comprising a phase-locked loop with a frequency divider, other synthesizers and combinations thereof.

The synthesizer circuitry 706D may be configured to synthesize an output frequency for use by the mixer circuitry 706A of the RF circuitry 706 based on a frequency input and a divider control input. In some embodiments, the synthesizer circuitry 706D may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

The synthesizer circuitry 706D of the RF circuitry 706 may include a divider, a delay-locked loop (DLL), a multiplexer and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In such embodiments, the delay elements may be configured to break a VCO period up into Nd equal packets of phase, where Nd is the number of delay elements in the delay line. In this way, the DLL may provide negative feedback to help ensure that the total delay through the delay line is one VCO cycle.

In some embodiments, the synthesizer circuitry 706D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

The FEM circuitry 708 may include a receive signal path which may include circuitry configured to operate on RF signals received from one or more antennas 710, amplify the received signals, and provide the amplified versions of the received signals to the RF circuitry 706 for further processing. The FEM circuitry 708 may also include a transmit signal path which may include circuitry configured to amplify signals for transmission provided by the RF circuitry 706 for transmission by at least one of the one or more antennas 710.

In some embodiments, the FEM circuitry 708 may include a TX/RX switch configured to switch between a transmit mode and a receive mode operation. The FEM circuitry 708 may include a receive signal path and a transmit signal path. The receive signal path of the FEM circuitry 708 may include a low-noise amplifier (LNA) to amplify received RF signals and provide the amplified received RF signals as an output (e.g., to the RF circuitry 706). The transmit signal path of the FEM circuitry 708 may include a power amplifier (PA) configured to amplify input RF signals (e.g., provided by RF circuitry 706), and one or more filters configured to generate RF signals for subsequent transmission (e.g., by one or more of the one or more antennas 710.

In some embodiments, the MS device 700 may include additional elements such as, for example, memory/storage, a display, a camera, one of more sensors, an input/output (I/O) interface, other elements, and combinations thereof.

In some embodiments, the MS device 700 may be configured to perform one or more processes, techniques, and/or methods as described herein, or portions thereof.

FIG. 8 is a flow chart illustrating a method for determining a physical uplink control channel (xPUCCH) format. The method can be accomplished by various systems, including ones shown in conjunction with FIG. 2, including UE 202 and 5G RAN node 206. In the embodiment shown, the UE process downlink control information (DCI) is transmitted using a physical downlink control channel (xPDCCH) as part of a self-contained time division duplex (TDD) subframe structure indicating a payload size for uplink control information (UCI) in block 802. In block 804, the UE determines a physical uplink control channel (xPUCCH) format based on the UCI payload size. In block 806, the UE generates the xPUCCH format on an allocated resource which is indicated in the DCI.

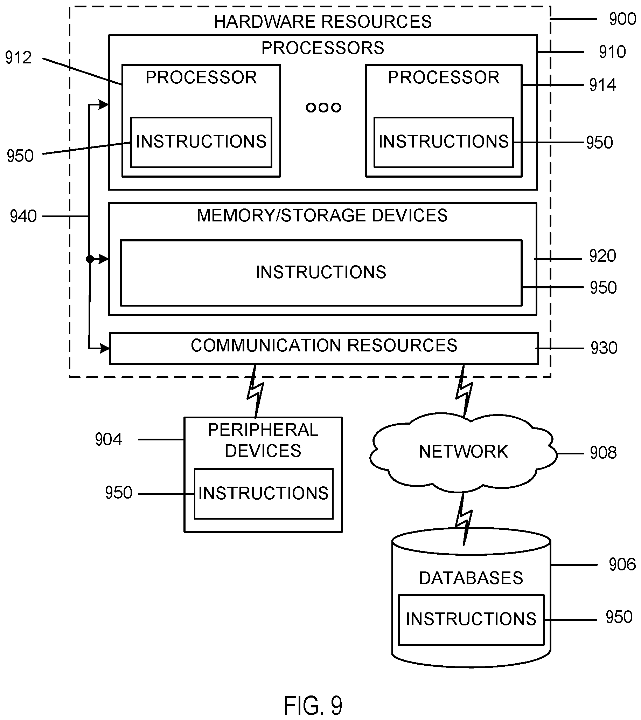

FIG. 9 is a block diagram illustrating components, according to some example embodiments, able to read instructions from a machine-readable or computer-readable medium (e.g., a machine-readable storage medium) and perform any one or more of the methodologies discussed herein. Specifically, FIG. 9 shows a diagrammatic representation of hardware resources 900 including one or more processors (or processor cores) 910, one or more memory/storage devices 920, and one or more communication resources 930, each of which are communicatively coupled via a bus 940.

The processors 910 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 912 and a processor 914. The memory/storage devices 920 may include main memory, disk storage, or any suitable combination thereof.

The communication resources 930 may include interconnection and/or network interface components or other suitable devices to communicate with one or more peripheral devices 904 and/or one or more databases 906 via a network 908. For example, the communication resources 930 may include wired communication components (e.g., for coupling via a Universal Serial Bus (USB)), cellular communication components, Near Field Communication (NFC) components, Bluetooth® components (e.g., Bluetooth® Low Energy), Wi-Fi® components, and other communication components.

Instructions 950 may comprise software, a program, an application, an applet, an app, or other executable code for causing at least any of the processors 910 to perform any one or more of the methodologies discussed herein. The instructions 950 may reside, completely or partially, within at least one of the processors 910 (e.g., within the processor's cache memory), the memory/storage devices 920, or any suitable combination thereof. Furthermore, any portion of the instructions 950 may be transferred to the hardware resources 900 from any combination of the peripheral devices 904 and/or the databases 906. Accordingly, the memory of processors 910, the memory/storage devices 920, the peripheral devices 904, and the databases 906 are examples of computer-readable and machine-readable media.

### Examples

The following examples pertain to further embodiments.
Example 1 is an apparatus of a UE. The apparatus includes storage for storing payload size information for uplink control information. The apparatus also includes a processor. The processor is designed to process downlink control information (DCI) indicating an uplink control information (UCI) payload size. The processor is designed to determine a fifth generation (5G) physical uplink control channel (xPUCCH) format based on the UCI payload size. The processor is also designed to encode the xPUCCH format on an allocated resource which is indicated in the DCI.
Example 2 is the apparatus of Example 1, where the storage is designed to store a dropping rule priority and where the one or more processors are designed to use a dropping rule if the UCI payload size exceeds a maximum allowable payload size supported by the xPUCCH format.
Example 3 is the apparatus of Example 2, where the dropping rule is designed to drop one or more of UCI information, including channel state information (CSI) report, beam state information (BSI) report, beam refinement information (BRI) report or hybrid automatic repeat request (HARQ) acknowledge (ACK)/negative acknowledge (NACK) feedback when the UCI payload size exceeds the maximum allowable payload size supported by the xPUCCH format.
Example 4 is the apparatus of Example 3, where the dropping rule or a transmission priority of one or more of CSI report, BSI report, BRI report and HARQ ACK/NACK is pre-defined.
Example 5 is the apparatus of Example 3, where the dropping rule or a transmission priority of one or more of CSI report, BSI report or BRI report is defined based at least in part on a deployment scenario.
Example 6 is the apparatus of Example 2, where the dropping rule or a transmission priority of one or more of CSI report, BSI report, BRI report and HARQ ACK/NCK is designed by a radio access network (RAN) node through high layer signaling.
Example 7 is the apparatus of Example 6, where the high layer signaling is via master information block (xMIB), system information block (xSIB) or radio resource configuration (RRC) signaling.
Example 8 is the apparatus of Example 1, where the xPUCCH format includes a scheduling request transmission scheme that is combined with other UCI data.
Example 9 is the apparatus of Example 1, where the DCI includes an indicator for a transmission of a channel state information (CSI) report and beam related information only.
Example 10 is the apparatus of Example 1, where the payload size does not exceed a maximum allowable payload size supported by the xPUCCH format.
Example 11 is the apparatus of Example 1, where a beam threshold is designed by a radio access network (RAN) node through high layer signaling, and where exceeding the beam threshold causes a higher priority for beam reporting.
Example 12 is the apparatus of Example 1, where a field in the DCI indicates a schedule request for including a channel state information (CSI) report, a beam state information (BSI) report and a beam refinement information (BRI) report together.
Example 13 is the apparatus of Example 1, where a field in the DCI indicates the scheduling request (SR) resource for SR transmission and where an independent xPUCCH resource can be used for a SR and other UCI data.
Example 14 is the apparatus of Example 1, where a scheduling request (SR) is combined with other UCI data in a xPUCCH transmission.
Example 15 is the apparatus of Example 14, where a scheduling request (SR) bit is masked with a cyclic redundancy check value.
Example 16 is the apparatus of any of Examples 1-15, where the processor is a baseband processor.
Example 17 is an apparatus of a radio access network (RAN) node. The apparatus includes storage for storing payload size information for downlink control information (DCI). The apparatus also includes a processor. The processor is designed to generate the DCI indicating an uplink control information (UCI) payload size. The processor is designed to process data from a physical uplink control channel transmission on an allocated resource which is indicated in the DCI. The processor is also designed to determine a physical uplink control channel format based at least in part on the UCI payload size and the physical uplink control channel transmission.
Example 18 is the apparatus of Example 17, where a field in the DCI indicating downlink (DL) assignment and uplink (UL) grant is used to indicate a gap between a physical uplink control channel and a scheduled beam refinement reference signal (BRRS) transmission.
Example 19 is the apparatus of Example 17, where a beam refinement reference signal (BRRS) transmission gap bit field reuses a field for the physical uplink control channel or a physical uplink shared channel delay.
Example 20 is the apparatus of Example 17, where a field in the DCI with downlink (DL) assignment indicates whether a physical downlink shared channel is scheduled.
Example 21 is the apparatus of Example 17, where one or more reserved bits within the DCI are used to indicate whether a physical downlink shared channel is scheduled or not.
Example 22 is the apparatus of Example 17, where a DCI format for DCI is defined to only include the request of a channel state information (CSI) report, a beam state information (BSI) report or a beam refinement information (BRI) report and scheduling request (SR).
Example 23 is the apparatus of Example 22, where zero padding is used to match the size of the DCI format with other DCI formats.
Example 24 is the apparatus of any of Examples 17-23, where the processor is a baseband processor.
Example 25 is the apparatus of any of Examples 17-23, where the RAN node is an enhanced node B (eNB).
Example 26 is the apparatus of any of Examples 17-23, where the physical uplink control channel is a fifth generation (5G) physical uplink control channel (xPUCCH).
Example 27 is a computer program product. The computer program product includes a computer-readable storage medium that stores instructions for execution by one or more processors to perform operations of a user equipment (UE). The operations, when executed by the one or more processors, cause the one or more processors to process downlink control information (DCI) transmitted using a physical downlink control channel (xPDCCH) as part of a self-contained time division duplex (TDD) subframe structure indicating a payload size for uplink control information (UCI). The operations cause the one or more processors to determine a physical uplink control channel (xPUCCH) format based on the UCI payload size. The operations also cause the one or more processors to encode the xPUCCH format on an allocated resource which is indicated in the DCI.
Example 28 is the computer program product of Example 27, where a UCI transmission is triggered by downlink (DL) DCI and when the UCI payload size is larger than a threshold, dropping part of UCI information with a lower priority based at least in part on a priority rule.
Example 29 is the computer program product of Example 28, where the priority rule describes a decreasing priority order of hybrid automatic repeat request (HARQ) acknowledge (ACK)/negative acknowledge (NACK) information, scheduling request (SR) information, beam state information (BSI), beam refinement information (BRI), rank indicator (RI) information, channel quality indicator (CQI) and pre-coding matrix indicator (PMI) information.
Example 30 is the computer program product of Example 27, where the xPUCCH format further includes a combined channel state information (CSI), beam state information (BSI) and beam refinement information (BRI) indicator value.
Example 31 is the computer program product of Example 30, where the combined channel state information (CSI), beam state information (BSI) and beam refinement information (BRI) indicator value is three bits. When the indicator value is 000, then none of CSI, BSI or BRI is requested. When the indicator value is 001, then BSI reporting is triggered. When the indicator value is 010, then a beam refinement reference signal (BRRS) is allocated and corresponding BRI reporting is triggered. When the indicator value is 011, then a BRRS is allocated and but BRI reporting is not triggered. When the indicator value is 100, a channel state information-reference signal (CSI-RS) is allocated and also corresponding CSI reporting is triggered. Additionally, when the indicator value is 101, a scheduling request is triggered via a xPUCCH transmission.
Example 32 is the computer program product of Example 27, where the xPUCCH format further includes a transmission timing indicator of channel state information-reference signal (CSI-RS) or beam refinement reference signal (BRRS) that indicates transmission time offset value from a set delay.
Example 33 is the computer program product of Example 27, where the xPUCCH format includes a resource block assignment indicator. It is the computer program product where the resource block assignment indicator indicates more than zero resource blocks when the resource block assignment indicator is less than a threshold. It is also the computer program product where when the resource block assignment indicator indicates no assignment of resource blocks when the resource block assignment indicator is equal to the threshold.
Example 34 is a method of communicating using a physical uplink control channel (xPUCCH). It is a method of processing downlink control information (DCI) transmitted using a physical downlink control channel (xPDCCH) as part of a self-contained time division duplex (TDD) subframe structure indicating a payload size for uplink control information (UCI). It is a method of determining a xPUCCH format based on the UCI payload size. It is also a method of encoding the xPUCCH format on an allocated resource which is indicated in the DCI.
Example 35 is the method of Example 34, where a UCI transmission is triggered by downlink (DL) DCI and when the UCI payload size is larger than a threshold, dropping part of UCI information with a lower priority based at least in part on a priority rule.
Example 36 is the method of Example 34, where the priority rule describes a decreasing priority order of hybrid automatic repeat request (HARQ) acknowledge (ACK)/negative acknowledge (NACK) information, scheduling request (SR) information, beam state information (BSI), beam refinement information (BRI), rank indicator (RI) information, channel quality indicator (CQI) and pre-coding matrix indicator (PMI) information.
Example 37 is the method of Example 34, where the xPUCCH format further includes a combined channel state information (CSI), beam state information (BSI) and beam refinement information (BRI) indicator value.
Example 38 is the method of Example 37, where the combined channel state information (CSI), beam state information (BSI) and beam refinement information (BRI) indicator value is three bits. When the indicator value is 000, then none of CSI, BSI or BRI is requested. When the indicator value is 001, then BSI reporting is triggered. When the indicator value is 010, then a beam refinement reference signal (BRRS) is allocated and corresponding BRI reporting is triggered. When the indicator value is 011, then a BRRS is allocated and but BRI reporting is not triggered. When the indicator value is 100, a channel state information-reference signal (CSI-RS) is allocated and also corresponding CSI reporting is triggered. Additionally, when the indicator value is 101, a scheduling request is triggered via a xPUCCH transmission.
Example 39 is the method of Example 34, where the xPUCCH format further includes a transmission timing indicator of channel state information-reference signal (CSI-RS) or beam refinement reference signal (BRRS) that indicates transmission time offset value from a set delay.
Example 40 is the method of Example 34, where the xPUCCH format includes a resource block assignment indicator. The resource block assignment indicator will indicate more than zero resource blocks when the resource block assignment indicator is less than a threshold. The resource block assignment indicator will indicate no assignment of resource blocks when the resource block assignment indicator is equal to the threshold.
Example 41 is an apparatus including procedures to perform a method as exemplified in any of Examples 34-40.
Example 42 is a machine-readable storage including machine-readable instructions, when executed, will implement a method or realize an apparatus as exemplified in any of Examples 34-40.
Example 43 is a machine readable medium including code, when executed, will cause a machine to perform the method of any one of Examples 34-40.

In an additional example, physical uplink control channel procedures can include a UE procedure for determining physical uplink channel assignment. In subframe n, uplink control information (UCI) shall be transmitted on xPUCCH using format 2 if the UCI transmission is triggered by DL DCI and if the UCI payload size is not larger than 22 bits. In subframe n, uplink control information (UCI) shall be transmitted on xPUCCH using format 2 if the UCI transmission is triggered by DL DCI and if the UCI payload size is larger than 22 bits, in which case UCIs with lower priority are dropped according to the following priority rule: HARQ-ACK, SR, BSI, BRI, RI, and CQI/PMI with decreasing order of the priority. In subframe n, uplink control information (UCI) shall be transmitted on xPUSCH if the UCI transmission is triggerd by UL DCI.

In another example, fields defined in DCI formats are mapped to the information bits *a*₀ to *a*_{*A*-1}. Each field is mapped in the order in which it appears in the description, including the zero-padding bit(s), if any, with the first field mapped to the lowest order information bit *a*₀ and each successive field mapped to higher order information bits. The most significant bit of each field is mapped to the lowest order information bit for that field, e.g. the most significant bit of the first field is mapped to *a*₀.

In the example, DCI format A1 is used for the scheduling of xPUSCH. Information is transmitted by means of the DCI format A1 in subframe n, including a CSI / BSI / BRI request of 3 bits. If the indicated value is 000, then none of CSI/BSI/BRI is requested. Else if the indicated value is 001, then this DCI format triggers BSI reporting. Else if the indicated value is 010, then this DCI format allocates BRRS and also triggers corresponding BRI reporting. Else if the indicated value is 011, then this DCI format allocates BRRS but does not trigger BRI reporting. Else if the indicated value is 100, then this DCI format allocates CSI-RS and also triggers corresponding CSI reporting. The values 101, 110 and 111 are reserved.

In the example, the DCI format A1 can include a transmission timing of CSI-RS / BRRS that is 2 bits, where this field indicates transmission time offset value m ∈ {0, 1, 2, 3}. If this DCI format allocates either of CSI-RS or BRRS, then the corresponding transmission is allocated in subframe n + m. Otherwise, it shall be set to all zeros.

In one example, DCI format B1 is used for the scheduling of xPDSCH. Information is transmitted by means of the DCI format B1 in subframe n, including a RB assignment of 9 bits. If the indicated value is smaller than or equal to 324, then this field assigns more than zero RB. Else if the indicated value is equal to 325, then this format assigns zero RB. Else if the indicated value is equal to 326, then this format assigns zero RB and used for random access procedure initiated by a xPDCCH order. Otherwise, then this format is assumed to be misconfigured and UE shall discard the corresponding xPDCCH.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel®, AMD®, or other "off-the-shelf' microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of the embodiments. One skilled in the relevant art will recognize, however, that the embodiments may be practiced without one or more of the specific details, or with other methods, components, materials, etc. In other instances, well-known structures, materials, or operations are not shown or described in detail to avoid obscuring aspects of the embodiments.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects /etc. are merely described in one or more embodiments for clarity, and it is recognized that the parameters/attributes/aspects /etc. can be combined with or substituted for parameters/attributes/etc. of another embodiment unless specifically disclaimed herein.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the embodiments are not to be limited to the details given herein, but may be modified within the scope of the appended claims.

Those having skill in the art will appreciate that many changes may be made to the details of the above-described embodiments without departing from the underlying principles. The scope of the present disclosure should, therefore, be determined only by the following claims.

## Claims

1. An apparatus (700) of a UE, comprising:
storage for storing payload size information for uplink control information;
baseband circuitry (704), including one or more processors (704 A-G), configured to: process downlink control information, DCI, ;
determine a physical uplink control channel, xPUCCH, format based on an uplink control information , UCI, payload size; and
encode the xPUCCH format on an allocated resource which is indicated in the DCI;
**characterized in that** the DCI indicates the uplink control information, UCI, payload size.

2. The apparatus (700) of claim 1, wherein the storage is configured to store a dropping rule priority; and
wherein the one or more processors (704 A-G) is further configured to use a dropping rule if the UCI payload size exceeds a maximum allowable payload size supported by the xPUCCH format.

3. The apparatus (700) of claim 2, wherein the dropping rule is configured to drop one or more of UCI information, including channel state information, CSI, report, beam state information, BSI, report, beam refinement information, BRI, report or hybrid automatic repeat request, HARQ, acknowledge, ACK,/negative acknowledge, NACK feedback when the UCI payload size exceeds the maximum allowable payload size supported by the xPUCCH format.

4. The apparatus (700) of claim 3, wherein the dropping rule or a transmission priority of one or more of CSI report, BSI report, BRI report and HARQ ACK/NACK is predefined.

5. The apparatus (700) of claim 3, wherein the dropping rule or a transmission priority of one or more of CSI report, BSI report, BRI report and HARQ ACK/NACK is configured by a radio access network, RAN, node through high layer signaling.

6. The apparatus (700) of claim 5, wherein the high layer signaling is via master information block, xMIB, system information block, xSIB, or radio resource configuration, RRC, signaling.

7. The apparatus (700) of claim 1, wherein the DCI comprises an indicator for a transmission of a channel state information CSI report and beam related information only.

8. The apparatus (700) of claim 1, wherein a beam threshold is configured by a radio access network, RAN, node through high layer signaling, and wherein exceeding the beam threshold causes a higher priority for beam reporting.

9. An apparatus (700) of a radio access network, RAN, node, comprising: storage for storing payload size information for downlink control information, DCI,; a processor configured to:
generate the DCI ;
determine a physical uplink control channel format based at least in part on the UCI payload size and a physical uplink control channel transmission on an allocated resource which is indicated in the DCI; and decode data from the physical uplink control channel transmission based at least in part on the determined physical uplink control channel format;
**characterized in that** the DCI indicates the uplink control information, UCI, payload size.

10. The apparatus (700) of claim 9, wherein a field in the DCI indicating downlink, DL, assignment and uplink, UL, grant is used to indicate a gap between a physical uplink control channel and a scheduled beam refinement reference signal, BRRS, transmission.

11. The apparatus (700) of claim 9, wherein a beam refinement reference signal, BRRS, transmission gap bit field reuses a field for the physical uplink control channel or a physical uplink shared channel delay.

12. A method of communicating using a physical uplink control channel, xPUCCH, comprising the steps of processing downlink control information, DCI; determining xPUCCH format based on an uplink control information, UCI, payload size; and encoding the xPUCCH format on an allocated resource which is indicated in the DCI; **characterized in that** the DCI indicates the uplink control information, UCI, payload size .

13. The method of claim 12, wherein a UCI transmission is triggered by downlink, DL, DCI and when the UCI payload size is larger than a threshold, dropping part of UCI information with a lower priority based at least in part on a priority rule.

14. The method of claim 12, wherein the xPUCCH format further comprises a combined channel state information, CSI, beam state information, BSI, and beam refinement information, BRI, indicator value.

15. The method of claim 12, wherein the xPUCCH format includes a resource block assignment indicator, the resource block assignment indicator indicating more than zero resource blocks when the resource block assignment indicator is less than a threshold, and the resource block assignment indicator indicating no assignment of resource blocks when the resource block assignment indicator is equal to the threshold.

## Patentansprüche

1. Apparat (700) eines UE, umfassend:
Speicher zum Speichern von Nutzlastgrößeninformation für Uplink-Steuerinformation;
Basisband-Schaltung (704), beinhaltend einen oder mehrere Prozessoren (704 A-G), konfiguriert zum:
Prozessieren von Downlink-Steuerinformation, DCI,;
Bestimmen von einem physikalischen Uplink-Steuerkanal-, xPUCCH-, Format basierend auf einer Uplink-Steuerinformation-, UCI-, Nutzlastgröße; und
Kodieren des xPUCCH-Formats auf einer zugewiesenen Ressource, die in dem DCI angezeigt ist;
**gekennzeichnet dadurch, dass** die DCI die Uplink-Steuerinformation-, UCI-, Nutzlastgröße anzeigt.

2. Apparat (700) nach Anspruch 1, wobei der Speicher konfiguriert ist zum Speichern einer Priorität einer Abwurfregel; und
wobei der eine oder die mehreren Prozessoren (704 A-G) ferner konfiguriert sind zum Anwenden einer Abwurfregel, wenn die UCI Nutzlastgröße eine maximal zulässige Nutzlastgröße, die von dem xPUCCH-Format unterstützt wird, überschreitet.

3. Apparat (700) nach Anspruch 2, wobei die Abwurfregel konfiguriert ist zum Abwerfen von einer oder mehrerer UCI-Information, beinhaltend Kanalstatusinformations-, CSI-, Report, Strahlstatusinformations-, BSI, Report, Strahlverbesserungsinformations-, BRI, Report oder hybride automatische Wiederholungsanfrage, HARQ, Bestätigung, ACK, /negative Bestätigung, NACK Rückmeldung, wenn die UCI Nutzlastgröße die maximal zulässige Nutzlastgröße, die von dem xPUCCH-Format unterstützt wird, überschreitet.

4. Apparat (700) nach Anspruch 3, wobei die Abwurfregel oder eine Übertragungspriorität von einem oder mehreren von CSI-Report, BSI-Report, BRI-Report und HARQ ACK/NACK vorbestimmt ist.

5. Apparat (700) nach Anspruch 3, wobei die Abwurfregel oder eine Übertragungspriorität von einem oder mehreren von CSI-Report, BSI-Report, BRI-Report und HARQ ACK/NACK konfiguriert ist von einem Funkzugangsnetzwerk-, RAN-, Knoten über High-Layer-Signalisierung.

6. Apparat (700) nach Anspruch 5, wobei die High-Layer-Signalisierung über Master-Informationsblock-, xMIB-, Systeminformationsblock-, xSIB, oder Funkressourcenkonfiguration-, RRC-, Signalisierung ist.

7. Apparat (700) nach Anspruch 1, wobei die DCI alleinig eine Anzeige für eine Übertragung eines Kanalzustandsinformations- CSI- Reports und strahlbezogener Information umfasst.

8. Apparat (700) nach Anspruch 1, wobei ein Strahlschwellenwert konfiguriert ist von einem Funkzugangsnetzwerk-, RAN-, Knoten über High-Layer-Signalisierung, und wobei Überschreiten des Strahlschwellenwertes eine höhere Priorität verursacht für Strahlberichterstattung.

9. Apparat (700) für ein Funkzugangsnetzwerk-, RAN-, Knoten, umfassend:
Speicher zum Speichern von Nutzlastgrößeninformation für Downlink-Steuerinformation, DCI,;
einen Prozessor konfiguriert zum:
Erzeugen der DCI;
Bestimmen eines physikalischen Uplink-Steuerkanalformats basierend zumindest zum Teil auf der UCI Nutzlastgröße und einer physikalischen Uplink-Steuerkanalübertragung auf einer zugewiesenen Ressource, die angezeigt ist in der DCI; und
Dekodieren von Daten der physikalischen Uplink-Steuerkanalübertragung basierend zumindest zum Teil auf dem bestimmten physikalischen Uplink-Steuerkanalformat;
**dadurch gekennzeichnet, dass** die DCI die Uplink-Steuerinformation-, UCI-, Nutzlastgröße anzeigt.

10. Apparat (700) nach Anspruch 9, wobei ein Feld in der DCI, welches Downlink-, DL-, Zuordnung und Uplink-, UL-, Erteilung anzeigt verwendet wird zum Anzeigen einer Lücke zwischen einem physikalischen Uplink-Steuerkanal und einer geplanten Strahlverbesserungsreferenzsignal-, BRRS-, Übertragung.

11. Apparat (700) nach Anspruch 9, wobei ein Lückenbitfeld einer Strahlverbesserungsreferenzsignal-, BRRS-, Übertragung ein Feld für den physikalischen Uplink-Steuerkanal oder eine physical uplink shared channel delay wiederverwendet.

12. Verfahren zum Kommunizieren unter Verwenden eines physikalischen Uplink-Steuerkanals, xPUCCH, umfassend die Schritte von Prozessieren von Downlink-Steuerinformation, DCI; Bestimmen eines xPUCCH-Formats basierend auf einer Uplink-Steuerinformation-, UCI-, Nutzlastgröße; und
Kodieren des xPUCCH-Formats auf einer zugewiesenen Ressource, die angezeigt ist in der DCI;
**dadurch gekennzeichnet, dass**
der DCI die Uplink-Steuerinformation-, UCI-, Nutzlastgröße anzeigt.

13. Verfahren nach Anspruch 12, wobei eine UCI-Übertragung ausgelöst wird von einer Downlink-, DL-, DCI und wenn die UCI-Nutzlastgröße größer ist als ein Schwellenwert, Abwerfen eines Teils der UCI-Information mit einer niedrigen Priorität basierend zumindest zum Teil auf einer Prioritätsregel.

14. Verfahren nach Anspruch 12, wobei das xPUCCH-Format ferner einen kombinierten Kanalstatusinformations-, CSI-, Strahlstatusinformations-, BSI-, und Strahlverbesserungsinformations-, BRI-, Anzeigewert umfasst.

15. Verfahren nach Anspruch 12, wobei das xPUCCH-Format eine Ressourcenblock-Zuordnungsanzeige beinhaltet, wobei die Ressourcenblock-Zuordnungsanzeige mehr als Null Ressourcenblöcke anzeigt, wenn die Ressourcenblock-Zuordnungsanzeige geringer ist als ein Schwellenwert, und die Ressourcenblock-Zuordnungsanzeige keine Zuordnung von Ressourcenblöcken anzeigt, wenn die Ressourcenblock-Zuordnungsanzeige gleich ist zu dem Schwellenwert.

## Revendications

1. Un appareil (700) d'un UE, comprenant :
un stockage pour stocker une information de taille de charge utile pour une information de contrôle de liaison montante ;
un ensemble de circuits en bande de base (704), incluant un ou plusieurs processeurs (704 A-G), configurés pour :
traiter une information de contrôle de liaison descendante, DCI ;
déterminer un format de canal de contrôle de liaison montante physique, xPUCCH, sur la base d'une taille de charge utile d'information de contrôle de liaison montante, UCI ; et
coder le format xPUCCH sur une ressource allouée qui est indiquée dans la DCI ;
**caractérisé en ce que** la DCI indique la taille de charge utile d'information de contrôle de liaison montante, UCI.

2. L'appareil (700) selon la revendication 1, dans lequel le stockage est configuré pour stocker une priorité de règle d'abandon ; et
dans lequel les un ou plusieurs processeurs (704 A-G) sont en outre configurés pour utiliser une règle d'abandon si la taille de charge utile UCI dépasse une taille de charge utile maximale admissible prise en charge par le format xPUCCH.

3. L'appareil (700) selon la revendication 2, dans lequel la règle d'abandon est configurée pour abandonner un ou plusieurs parmi une information UCI, incluant un rapport d'information d'état de canal, CSI, un rapport d'information d'état de faisceau, BSI, un rapport d'information d'amélioration de faisceau, BRI, ou une rétroaction d'accusé de réception, ACK,/accusé de réception négatif, NACK, de requête de répétition automatique hybride, HARQ, lorsque la taille de charge utile UCI dépasse la taille de charge utile maximale admissible prise en charge par le format xPUCCH.

4. L'appareil (700) selon la revendication 3, dans lequel la règle d'abandon ou une priorité de transmission d'un ou plusieurs parmi le rapport CSI, le rapport BSI, le rapport BRI et ACK/NACK HARQ est prédéfinie.

5. L'appareil (700) selon la revendication 3, dans lequel la règle d'abandon ou une priorité de transmission d'un ou plusieurs parmi le rapport CSI, le rapport BSI, le rapport BRI et ACK/NACK HARQ est configurée par un nœud de réseau d'accès radio, RAN, par l'intermédiaire d'une signalisation de couche supérieure.

6. L'appareil (700) selon la revendication 5, dans lequel la signalisation de couche supérieure se fait via un bloc d'information maître, xMIB, un bloc d'information système, xSIB, ou une signalisation de configuration de ressource radio, RRC.

7. L'appareil (700) selon la revendication 1, dans lequel la DCI comprend un indicateur pour une transmission d'un rapport d'information d'état de canal CSI et d'une information liée au faisceau uniquement.

8. L'appareil (700) selon la revendication 1, dans lequel un seuil de faisceau est configuré par un nœud de réseau d'accès radio, RAN, par l'intermédiaire d'une signalisation de couche supérieure, et dans lequel le dépassement du seuil de faisceau entraîne une priorité plus élevée pour le rapport de faisceau.

9. Un appareil (700) d'un nœud de réseau d'accès radio, RAN, comprenant :
un stockage pour stocker une information de taille de charge utile pour une information de contrôle de liaison descendante, DCI ;
un processeur configuré pour :
générer la DCI ;
déterminer un format de canal de contrôle de liaison montante physique sur la base au moins en partie de la taille de charge utile UCI et d'une transmission de canal de contrôle de liaison montante physique sur une ressource allouée qui est indiquée dans la DCI ; et
décoder une donnée à partir de la transmission de canal de contrôle de liaison montante physique sur la base au moins en partie du format de canal de contrôle de liaison montante physique déterminé ;
**caractérisé en ce que** la DCI indique la taille de charge utile d'information de contrôle de liaison montante, UCI.

10. L'appareil (700) selon la revendication 9, dans lequel un champ dans la DCI indiquant une assignation de liaison descendante, DL, et un octroi de liaison montante, UL, est utilisé pour indiquer un intervalle entre un canal de contrôle de liaison montante physique et une transmission de signal de référence d'amélioration de faisceau, BRRS, planifiée.

11. L'appareil (700) selon la revendication 9, dans lequel un champ de bits d'intervalle de transmission de signal de référence d'amélioration de faisceau, BRRS, réutilise un champ pour le canal de contrôle de liaison montante physique ou un retard de canal partagé de liaison montante physique.

12. Un procédé de communication utilisant un canal de contrôle de liaison montante physique, xPUCCH, comprenant les étapes de :
traitement d'une information de contrôle de liaison descendante, DCI ;
détermination d'un format xPUCCH sur la base d'une taille de charge utile d'information de contrôle de liaison montante, UCI ; et
codage du format xPUCCH sur une ressource allouée qui est indiquée dans la DCI ;
**caractérisé en ce que** la DCI indique la taille de charge utile d'information de contrôle de liaison montante, UCI.

13. Le procédé selon la revendication 12, dans lequel une transmission UCI est déclenchée par une DCI de liaison descendante, DL, et lorsque la taille de charge utile UCI est supérieure à un seuil, abandonner une partie d'une information UCI avec une priorité plus faible sur la base au moins en partie d'une règle de priorité.

14. Le procédé selon la revendication 12, dans lequel le format xPUCCH comprend en outre une valeur d'indicateur d'information d'état de canal, CSI, d'information d'état de faisceau (BSI) et d'information d'amélioration de faisceau, BRI, combinée.

15. Le procédé selon la revendication 12, dans lequel le format xPUCCH inclut un indicateur d'assignation de bloc de ressources,
l'indicateur d'assignation de bloc de ressources indiquant plus de zéro bloc de ressources lorsque l'indicateur d'assignation de bloc de ressources est inférieur à un seuil, et
l'indicateur d'assignation de bloc de ressources indiquant aucune assignation de blocs de ressources lorsque l'indicateur d'assignation de bloc de ressources est égal au seuil.
